# EUROPEAN PATENT APPLICATION

(11) **EP 4 467 922 A1**
(43) Date of publication of application: **27.11.2024**
(21) Application number: 23802655.3
(22) Date of filing: 26.04.2023
(51) Int. Cl.: G01B 11/14, G01B 21/16, H01M 10/05, H01M 10/0587

(54) **PLATE TEST DEVICE AND METHOD, AND WINDING DEVICE**

(30) Priority: 07.05.2022 CN 202210489180
(71) Applicant: Contemporary Amperex Technology Co., Limited, Ningde, Fujian 352100 (CN)
(72) Inventor: LIN, Shuigen, Ningde, Fujian 352100 (CN); XIE, Chao, Ningde, Fujian 352100 (CN); MA, Shiwu, Ningde, Fujian 352100 (CN); HUANG, Guoda, Ningde, Fujian 352100 (CN); FAN, Xiang, Ningde, Fujian 352100 (CN)
(74) Representative: Holt, Lucy Rose
(86) International application number: PCT/CN2023/090718
(87) International publication number: WO 2023/216881

(57) **Abstract**

A plate test device, comprising: a combining unit (110), which is used for combining a separator (101) on one side of a first plate (102) in the thickness direction of the first plate (102), the first plate (102) comprising at least two sub-plates spaced apart from each other in a conveying direction of the first plate (102); a measurement unit (120), which is arranged downstream of the combining unit (110) in the conveying direction and is used for measuring a first distance between two combined adjacent sub-plates in the conveying direction; and a processing unit (130), which is used for determining, according to the first distance, whether the combined first plate (102) is up to standard, thereby achieving effective testing of a plate and improving the quality thereof. Further provided are a plate test method and a winding device.

## Description

The present application claims the priority of Chinese Application No. 202210489180.9 entitled "ELECTRODE PLATE INSPECTION DEVICE AND METHOD, AND WINDING DEVICE" and filed with the China National Intellectual Property Administration on 07 May, 2022, which is incorporated herein by reference in its entirety.

### TECHNICAL FIELD

The present application relates to the field of inspection technology, and in particular to an electrode plate inspection device and method, and a winding device.

### BACKGROUND

Energy conservation and emission reduction are the key to the sustainable development of the automobile industry. In this case, electric vehicles have become an important part of the sustainable development of the automobile industry because of their advantages of energy saving and environmental friendliness. For the electric vehicles, the battery technology is an important factor related to their development.

The battery refers to a physical module that includes one or more battery cells to supply electric energy. The battery cell includes an electrode assembly composed of electrode plates and a separator. The quality of the electrode plate is closely related to the quality of the battery. Therefore, how to effectively inspect the electrode plate is an urgent problem to be solved.

### SUMMARY OF THE INVENTION

Embodiments of the present application provide an electrode plate inspection device and method, and a winding device, which can enable effective inspection of an electrode plate, thereby improving the quality of the electrode plate.

In a first aspect, provided is an electrode plate inspection device, including: a combining unit is configured to combine a separator on a side of a first electrode plate in a thickness direction of the first electrode plate, the first electrode plate including at least two sub-electrode plates arranged at intervals in a conveying direction of the first electrode plate; a measuring unit arranged downstream of the combining unit in the conveying direction, and configured to measure a first distance between two adjacent combined sub-electrode plates in the conveying direction; and a processing unit configured to determine whether the combined first electrode plate is qualified according to the first distance.

In the embodiments of the present application, at least two electrode plates are arranged at intervals, and the distance between two adjacent electrode plates affects the quality of the battery. For example, if the electrode plate is subsequently subjected to a winding operation and the distance between two adjacent electrode plates is not appropriate, a corner of the electrode plate may be wrinkled, thereby seriously affecting the energy density, service life and other performances of the battery. Therefore, determining whether an electrode plate is qualified according to the distance between two adjacent electrode plates can enable effective inspection of the electrode plate, improving the quality of the electrode plate, thereby improving the performance of the battery composed of this electrode plate.

Further, the separator includes a first separator and a second separator, and the electrode plate and the separator are combined in advance, so that the problem of misalignment between the first separator and the second separator during subsequent operations can be reduced, and the quality of the electrode plate can thus be further improved.

In some possible embodiments, the measuring unit further includes a sensor configured to obtain positions of the combined sub-electrode plates; and the processing unit is configured to determine whether the combined first electrode plate is qualified according to the positions and the first distance.

In the above technical solution, a sensor configured to obtain positions of the combined sub-electrode plates is added in the electrode plate inspection device, and whether the first electrode plate is qualified is determined according to the positions of the combined sub-electrode plates in addition to the first distance. That is, whether the first electrode plate is qualified is determined according to multiple parameters, so that the inspection accuracy of the electrode plate can be improved, further improving the quality of the electrode plate and the battery composed of this electrode plate.

In some possible embodiments, the sensor is a color mark sensor, a color mark is provided at an end of each sub-electrode plate, and the color mark sensor is configured to obtain the positions of the sub-electrode plates by sensing the color marks.

In the above technical solution, since a color mark is provided at an end of each sub-electrode plate, and the color mark sensor obtains the positions of the sub-electrode plates by sensing the color marks, the positions of the sub-electrode plates can be determined with a high accuracy. In addition, the sensor, which is configured as a color mark sensor, is less costly.

In some possible embodiments, the sub-electrode plates include a first sub-electrode plate and a second sub-electrode plate adjacent to each other, the second sub-electrode plate is located downstream of the first sub-electrode plate in the conveying direction, and the first distance is a distance between the first sub-electrode plate and the second sub-electrode plate; wherein the sensor is a color mark sensor configured to obtain the position of the second sub-electrode plate by sensing a color between the first sub-electrode plate and a preset position, the preset position being a preset position of the combined second sub-electrode plate; and the processing unit is configured to determine whether the combined first electrode plate is qualified according to the first distance and the color sensed by the color mark sensor.

In the above technical solution, it is simple for the processing unit to implement the determination of whether the first electrode plate is qualified according to the first distance and the color sensed by the color mark sensor; and compared with determining whether the first electrode plate is qualified according to one parameter (i.e., the first distance), determining whether the first electrode plate is qualified according to multiple parameters (i.e., the first distance and the color sensed by the color mark sensor) can improve the accuracy of determining whether the first electrode plate is qualified to some extent, further improving the quality of the electrode plate and the battery composed of this electrode plate. In addition, the sensor, which is configured as a color mark sensor, is less costly.

In some possible embodiments, the processing unit is configured to determine whether the combined first electrode plate is qualified according to the first distance when the color sensed by the color mark sensor is the same as the color of the separator.

In the above technical solution, if the color sensed by the color mark sensor is the same as the color of the separator, it is indicated that the position of the first sub-electrode plate is the same as the preset position, that is, the absolute position of the first sub-electrode plate is accurate. In this case, determining whether the combined first electrode plate is qualified according to the first distance contributes to further improving the inspection accuracy of the electrode plate.

In some possible embodiments, further included are: a speed sensor configured to detect a moving speed of the first electrode plate in the conveying direction; and a timer configured to measure the time it takes for the second sub-electrode plate to be conveyed to the preset position; wherein after it is determined that the second sub-electrode plate reaches the preset position according to the moving speed and the time, the color mark sensor is configured to sense the color between the first sub-electrode plate and the preset position.

In the above technical solution, whether the second sub-electrode plate reaches the preset position is determined by means of the speed sensor and the timer, so that the accuracy of determining whether the second sub-electrode plate reaches the preset position is high, and the color mark sensor can start sensing the color between the first sub-electrode plate and the preset position at an accurate time, thereby further improving the inspection accuracy of the electrode plate.

In some possible embodiments, the processing unit is configured to determine whether the combined first electrode plate is qualified according to a deviation between the first distance and a predetermined distance.

In some possible embodiments, when the combined first electrode plate is qualified, the combining unit is further configured to combine a continuous sub-electrode plate with the separator, the first electrode plate including the continuous sub-electrode plate, and the continuous sub-electrode plate being a continuous electrode plate combined after the at least two sub-electrode plates.

Since the angle of an outer corner is small when the electrode plate is subjected to a winding operation, the wrinkles caused by winding the electrode plate around the corner are relatively slight. In addition to the sub-electrode plates arranged at intervals, the first electrode plate in the above technical solution further includes a continuous sub-electrode plate, which can improve the performance of the battery, for example, increasing the energy density of the battery.

In some possible embodiments, further included is a removing unit configured, when the combined first electrode plate is unqualified, to remove the combined first electrode plate.

In the above technical solution, when the combined first electrode plate is unqualified, the removal of the unqualified first electrode plate can significantly increase the removal rate of unqualified products and thus improve the product quality of the battery.

In a second aspect, provided is a winding device, including: an electrode plate inspection device in the first aspect or in its various embodiments; and a winding needle configured to wind the combined first electrode plate and a second electrode plate together, wherein the second electrode plate is arranged on a side of the separator facing away from the first electrode plate, and the first electrode plate and the second electrode plate have different polarities.

In some possible embodiments, the combining unit is further configured to combine the second electrode plate with the separator, and the second electrode plate is a continuous electrode plate and is combined on the side of the separator facing away from the first electrode plate.

In a third aspect, provided is an electrode plate inspection method, including: combining a separator on a side of a first electrode plate in a thickness direction of the first electrode plate, the first electrode plate including at least two sub-electrode plates arranged at intervals in a conveying direction of the first electrode plate; measuring a first distance between two adjacent combined sub-electrode plates in the conveying direction; and determining whether the combined first electrode plate is qualified according to the first distance.

In some possible embodiments, the electrode plate inspection method further includes: obtaining positions of the combined sub-electrode plates; wherein the step of determining whether the combined first electrode plate is qualified according to the first distance includes: determining whether the combined first electrode plate is qualified according to the positions and the first distance.

In some possible embodiments, a color mark is provided at an end of each sub-electrode plate, and the step of obtaining positions of the combined sub-electrode plates includes: sensing the color marks to obtain the positions of the sub-electrode plates.

In some possible embodiments, the sub-electrode plates include a first sub-electrode plate and a second sub-electrode plate adjacent to each other, the second sub-electrode plate is located downstream of the first sub-electrode plate in the conveying direction, and the first distance is a distance between the first sub-electrode plate and the second sub-electrode plate; the step of obtaining positions of the combined sub-electrode plates includes: sensing a color between the first sub-electrode plate and a preset position to obtain the position of the second sub-electrode plate, the preset position being a preset position of the combined second sub-electrode plate; and the step of determining whether the combined first electrode plate is qualified according to the first distance and the positions includes: determining whether the combined first electrode plate is qualified according to the first distance and the sensed color.

In some possible embodiments, the step of determining whether the combined first electrode plate is qualified according to the first distance and the sensed color includes: determining whether the combined first electrode plate is qualified according to the first distance when the sensed color is the same as the color of the separator.

In some possible embodiments, the electrode plate inspection method further includes: detecting a moving speed of the first electrode plate in the conveying direction; and measuring the time it takes for the second sub-electrode plate to be conveyed to the preset position; wherein the step of sensing a color between the first sub-electrode plate and a preset position includes: sensing, after it is determined that the second sub-electrode plate reaches the preset position according to the moving speed and the time, the color between the first sub-electrode plate and the preset position.

In some possible embodiments, the step of determining whether the combined first electrode plate is qualified according to the first distance includes: determining whether the combined first electrode plate is qualified according to a deviation between the first distance and a predetermined distance.

In some possible embodiments, when the combined first electrode plate is qualified, the electrode plate inspection method further includes: combining a continuous sub-electrode plate with the separator, the first electrode plate including the continuous sub-electrode plate, and the continuous sub-electrode plate being a continuous electrode plate combined after the at least two sub-electrode plates.

In some possible embodiments, the electrode plate inspection method further includes: removing, when the combined first electrode plate is unqualified, the combined first electrode plate.

### DESCRIPTION OF DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic diagram of an electrode plate inspection device according to an embodiment of the present application.
Fig. 2 is a schematic diagram of an electrode assembly according to an embodiment of the present application.
Fig. 3 is a schematic diagram of another electrode plate inspection device according to an embodiment of the present application.
Fig. 4 is a schematic diagram of a first electrode plate combined with a separator according to an embodiment of the present application.
Fig. 5 is a schematic diagram of a winding device according to an embodiment of the present application.
Fig. 6 is a schematic block diagram of an electrode plate inspection method according to an embodiment of the present application.
Fig. 7 is a flow chart of a possible embodiment of an electrode plate inspection method according to an embodiment of the present application.

In the accompanying drawings, the figures are not necessarily drawn to scale.

### DETAILED DESCRIPTION

Implementations of the present application are described in further detail below in conjunction with the drawings and embodiments. The following detailed description of the embodiments and the drawings are configured to illustrate the principles of the present application by way of example, but should not be configured to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

In the vehicle industry environment that uses traditional energy as power supply, environmental pollution problems are becoming more and more serious. Actively developing new energy vehicles can reduce harm to the environment. For the new energy vehicles, the battery technology is an important factor related to their development.

The battery refers to a physical module that includes one or more battery cells to supply electric energy. For example, the battery mentioned in the present application may include a battery module or a battery pack, etc. The battery generally includes a box for packaging one or more battery cells. The box can reduce the influence of liquid or other foreign matters on the charging or discharging of the battery cells.

Optionally, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. In some embodiments, a battery cell may also be called a battery core.

The battery cell includes an electrode assembly and an electrolyte solution, the electrode assembly being composed of a positive electrode plate, a negative electrode plate and a separator. The battery cell operates mainly relying on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to allow a large current to pass without causing fusing, there are a plurality of positive tabs which are stacked together, and there are a plurality of negative tabs which are stacked together. The separator may be polypropylene (PP), polyethylene (PE), etc.

At present, consumers have increasingly higher requirements for the performance of the battery, and the quality of the electrode plate is closely related to the performance of the battery. In view of this, an embodiment of the present application proposes an electrode plate inspection device, which can enable effective inspection of an electrode plate, improve the quality of the electrode plate, and further improve the performance of the battery.

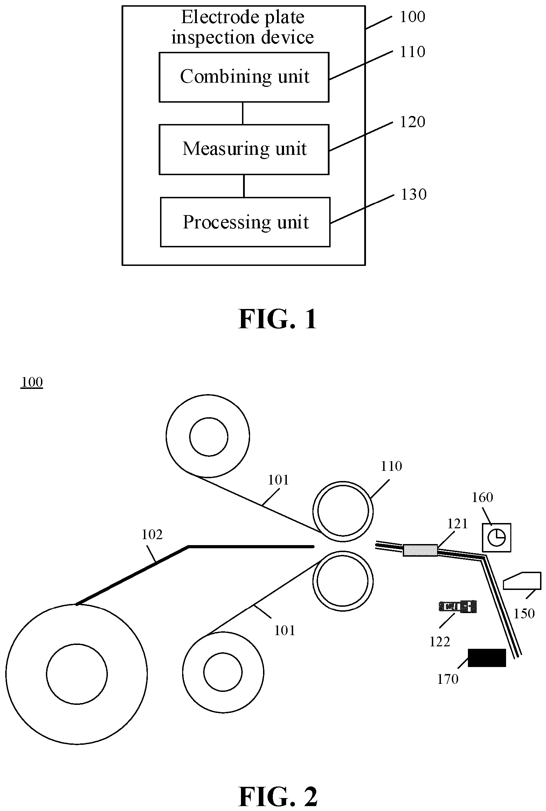

Figs. 1 and 2 are schematic diagrams of an electrode plate inspection device 100 according to an embodiment of the present application. As shown in Figs. 1 and 2, the electrode plate inspection device 100 may include a combining unit 110, a measuring unit 120 and a processing unit 130.

The combining unit 110 is configured to combine a separator 101 on a side of a first electrode plate 102 in a thickness direction of the first electrode plate 102. The first electrode plate 102 includes at least two sub-electrode plates arranged at intervals in a conveying direction of the first electrode plate 102. The measuring unit 120 is arranged downstream of the combining unit 110 in the conveying direction, and configured to measure a first distance between two adjacent combined sub-electrode plates in the conveying direction. The processing unit 130 is configured to determine whether the combined first electrode plate 102 is qualified according to the first distance.

In the embodiments of the present application, at least two electrode plates are arranged at intervals, and the distance between two adjacent electrode plates affects the quality of the battery. For example, if the electrode plate is subsequently subjected to a winding operation and the distance between two adjacent electrode plates is not appropriate, a corner of the electrode plate may be wrinkled, thereby seriously affecting the energy density, service life and other performances of the battery. Therefore, determining whether an electrode plate is qualified according to the distance between two adjacent electrode plates can enable effective inspection of the electrode plate, improving the quality of the electrode plate, thereby improving the performance of the battery composed of this electrode plate.

Further, as shown in Fig. 2, the separator 101 includes a first separator and a second separator, and the electrode plate and the separator 101 are combined in advance, so that the problem of misalignment between the first separator and the second separator during subsequent operations can be reduced, and the quality of the electrode plate can thus be further improved.

Specifically, the combining unit 110 may first combine the separator 101 with the first sub-electrode plate of the first electrode plate 102. Afterwards, the combining unit 120 combines the separator 101 with the second sub-electrode plate, and the measuring unit 120 measures the first distance between the first sub-electrode plate and the second sub-electrode plate. If the processing unit 130 determines that the first electrode plate 102 is qualified according to the first distance between the first sub-electrode plate and the second sub-electrode plate, the combining unit continues to combine the separator 101 with a third sub-electrode plate, and the measuring unit 120 measures a first distance between the second sub-electrode plate and the third sub-electrode plate, until all the sub-electrode plates included in the first electrode plate 102 are combined.

Alternatively, the combining unit 110 may first combine all the sub-electrode plates included in the first electrode plate 102 with the separator 101, the measuring unit 120 then measures at least one first distance between two adjacent combined sub-electrode plates, and the processing unit 130 determines whether the combined first electrode plate 102 is qualified according to the at least one first distance.

Alternatively, the combining unit 110 may combine N sub-electrode plates each time, where N is a positive integer greater than 1 and less than the number of sub-electrode plates included in the first electrode plate 102, and the measuring unit 120 then measures a first distance between the N sub-electrode plates once.

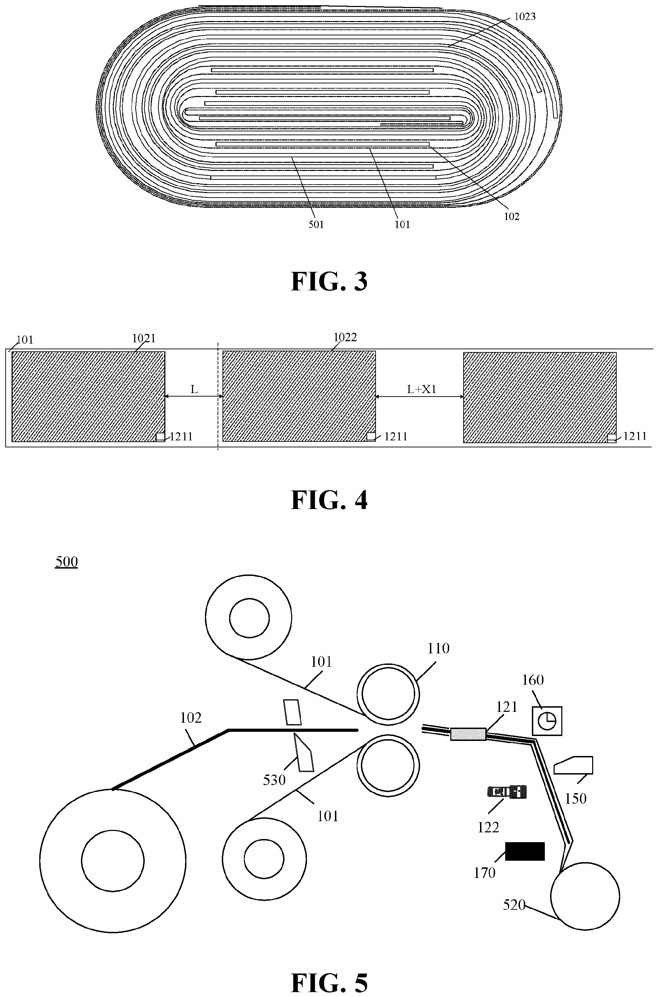

Optionally, the first electrode plate 102 may include five or six sub-electrode plates. For example, as shown in Fig. 3, the first electrode plate 102 includes five sub-electrode plates.

When the combined first electrode plate 102 is subjected to a winding operation, the five or six sub-electrode plates located at the beginning of the winding may have a corner wrinkled as shown in Fig. 3. Therefore, the number of sub-electrode plates included in the first electrode plate 102 is set to 5 or 6, so that when the combined first electrode plate 102 is wound, the electrode plate can just avoid the corner, thereby further improving the quality of the electrode plate and the performance of the battery composed of this electrode plate.

Referring to Figs. 3 and 4, when the first electrode plate 102 is subjected to a winding operation, the corner at the beginning of the winding may become larger and larger. Therefore, in the conveying direction of the first electrode plate 102, the first distance between adjacent sub-electrode plates among the at least two sub-electrode plates gradually increases. For example, the first distance between the first sub-electrode plate and the second sub-electrode plate is L, the first distance between the second sub-electrode plate and the third sub-electrode plate is L + X1, and the first distance between the third sub-electrode plate and a fourth sub-electrode plate is L + X2. L, X1 and X2 are all positive integers, and X1 is greater than X2.

When the first electrode plate 102 is subjected to a winding operation, the corner at the beginning of the winding may become larger and larger. Therefore, in the above technical solution, the first distance between adjacent sub-electrode plates among the at least two sub-electrode plates is also set to be larger and larger. That is, the first distance between adjacent sub-electrode plates matches the corner of the electrode assembly, so that the first electrode plate 102 can effectively avoid the corner position during the polarity winding operation of the first electrode plate 102, thereby improving the performance of the battery composed of the first electrode plate 102.

Optionally, the measuring unit 120 may be an image measuring unit. The image measuring unit may be, for example, a charge-coupled device (CCD), a camera, etc.

The measuring unit 120 may periodically measure the first distance. For example, the first distance is measured every 5 ms. Alternatively, the time interval at which the measuring unit 120 measures the first distance each time may be different. For example, the time interval between the first measurement of the first distance by the measuring unit 120 and the second measurement of the first distance is 3 ms, and the time interval between the second measurement of the first distance and the third measurement of the first distance is 5 ms.

In some embodiments, in order to further reduce the problem of wrinkling at the corner of the electrode plate, still referring to Fig. 2, the measuring unit 120 may further include a sensor 121 configured to obtain positions of the combined sub-electrode plates. The processing unit 130 is configured to determine whether the combined first electrode plate 102 is qualified according to the positions of the sub-electrode plates and the first distance.

In the above technical solution, a sensor configured to obtain positions of the combined sub-electrode plates is added in the electrode plate inspection device, and whether the first electrode plate 102 is qualified is determined according to the positions of the combined sub-electrode plates in addition to the first distance. That is, whether the first electrode plate 102 is qualified is determined according to multiple parameters, so that the inspection accuracy of the electrode plate can be improved, further improving the performance of the electrode plate and the battery composed of this electrode plate.

It should be noted that, in Fig. 2, the measuring unit configured to measure the first distance between the two adjacent sub-electrode plates in the conveying direction may be a camera 122. That is, the measuring unit 120 may include a sensor 121 and a camera 122.

In some embodiments, the sensor 121 may be a color mark sensor. As shown in Fig. 4, a color mark 1211 is provided at an end of each sub-electrode plate, and the color mark sensor may be configured to obtain the positions of the sub-electrode plates by means of the color marks 1211.

The color mark 1211 provided at the end of each sub-electrode plate is not specifically limited in the embodiments of the present application. The color mark 1211 can be any color, such as red, yellow, etc. The color marks 1211 provided at the ends of different sub-electrode plates may be the same or different. For example, the color mark 1211 provided at the end of the first sub-electrode plate is red, and the color mark 1211 provided at the end of the second sub-electrode plate is yellow.

Optionally, a color mark 1211 may be provided at either end of each sub-electrode plate, or color marks 1211 may be provided at two ends of each sub-electrode plate.

In this technical solution, since a color mark 1211 is provided at an end of each sub-electrode plate, and the color mark sensor obtains the positions of the sub-electrode plates by sensing the color marks 1211, the positions of the sub-electrode plates can be determined with a high accuracy. In addition, the sensor, which is configured as a color mark sensor, is less costly.

In some embodiments, as shown in Figure 4, the sub-electrode plates may include a first sub-electrode plate 1021 and a second sub-electrode plate 1022 adjacent to each other, the second sub-electrode plate 1022 is located downstream of the first sub-electrode plate 1021 in the conveying direction, and the first distance is a distance between the first sub-electrode plate 1021 and the second sub-electrode plate 1022. The color mark sensor may be configured to obtain the position of the second sub-electrode plate by sensing a color between the first sub-electrode plate 1021 and a preset position, the preset position being a preset position of the combined second sub-electrode plate 1022. The processing unit 130 is configured to determine whether the combined first electrode plate 102 is qualified according to the first distance and the color sensed by the color mark sensor.

As shown in Fig. 4, the color mark sensor may emit a signal, such as a pulse signal, toward a position (the position shown by the dotted line in the figure) slightly forward of the preset position in the direction of the first sub-electrode plate 1021 to sense the color between the first sub-electrode plate 1021 and the preset position.

Specifically, if the color sensed by the color mark sensor is the same as the color of the separator 101, it is indicated that the position of the second sub-electrode plate 1022 is the same as the preset position, and the position of the second sub-electrode plate 1022 is qualified. If the color sensed by the color mark sensor is different from the color of the separator 101, that is, the color sensed by the color mark sensor is the same as the color of the second sub-electrode plate 1022, it means that the second sub-electrode plate 1022 is different from the preset position, the position of the second sub-electrode plate 1022 exceeds the preset position, and the position of the second sub-electrode plate 1022 is unqualified.

In the above technical solution, it is simple for the processing unit to implement the determination of whether the first electrode plate 102 is qualified according to the first distance and the color sensed by the color mark sensor; and the accuracy of determining whether the first electrode plate 102 is qualified can be improved to some extent, improving the quality of the electrode plate and the battery composed of this electrode plate. In addition, the sensor, which is configured as a color mark sensor, is less costly.

As an example, the processing unit 130 may first determine the position of the second sub-electrode plate 1022 according to the color sensed by the color mark sensor. When the color sensed by the color mark sensor is the same as the color of the separator 101, the processing unit 130 may determine whether the combined first electrode plate 102 is qualified according to the first distance again.

In the above technical solution, if the color sensed by the color mark sensor is the same as the color of the separator 101, it is indicated that the position of the second sub-electrode plate 1022 is the same as the preset position, that is, the absolute position of the second sub-electrode plate 1022 is accurate. In this case, determining whether the combined first electrode plate 102 is qualified according to the first distance contributes to further improving the inspection accuracy of the electrode plate.

As another example, the processing unit 130 may first determine whether the combined first electrode plate 102 is qualified according to the first distance. If it is determined that the combined first electrode plate 102 is qualified according to the first distance, the processing unit 130 can further verify whether the combined first electrode plate 102 is qualified according to the color sensed by the color mark sensor. If the color sensed by the color mark sensor is the same as the color of the separator 101, it can be finally determined that the first electrode plate 102 is qualified.

In some embodiments, as shown again in Fig. 2, the electrode plate inspection device 100 may further include a speed sensor 150 and a timer 160. The speed sensor 150 is configured to detect a moving speed of the first electrode plate 102 in the conveying direction, and the timer 160 is configured to measure the time it takes for the second sub-electrode plate 1022 to be conveyed to the preset position. After it is determined that the second sub-electrode plate 1022 reaches the preset position according to the moving speed and the time measured by the timer 160, the color mark sensor is configured to sense the color between the first sub-electrode plate 1021 and the preset position.

That is to say, after the speed sensor 150 and the timer 160 detect that the second sub-electrode plate 1022 reaches the preset position, the speed sensor 150 and/or the timer 160 may send a detection command to the color mark sensor, the detection command being configured to instruct the color mark sensor to start sensing the color between the first sub-electrode plate 1021 and the preset position. Alternatively, the speed sensor 150 may send the moving speed of the first electrode plate 102 in the conveying direction to the color mark sensor, and the timer 160 may send the time it takes for the second sub-electrode plate 1022 to be conveyed to the preset position to the color mark sensor. Afterwards, the color mark sensor may determine whether the second sub-electrode plate 1022 reaches the preset position. If the color mark sensor determines that the second sub-electrode plate 1022 reaches the preset position, it starts to sense the color between the first sub-electrode plate 1021 and the preset position.

Optionally, the speed sensor 150 and the timer 160 may be integrated in the same apparatus or device. For example, the speed sensor 150 and the timer 160 are both provided in an encoder. Alternatively, the speed sensor 150 and the timer 160 may be provided separately.

It should be understood that the sensor 121 may be other sensors, such as a position sensor, in addition to the color mark sensor mentioned above.

In some embodiments of the present application, the processing unit 130 may be specifically configured to determine whether the combined first electrode plate 102 is qualified according to a deviation between the first distance and a predetermined distance.

The deviation mentioned in the above content may be, for example, a difference between the first distance and the predetermined distance, or may be a quotient between the first distance and the predetermined distance.

Specifically, when the deviation between the first distance and the predetermined distance is within a preset range, the processing unit 130 can determine that the combined first electrode plate 102 is qualified; and when the deviation between the first distance and the predetermined distance is not within the preset range, the processing unit 130 can determine that the combined first electrode plate 102 is unqualified.

Illustratively, when the deviation between the first distance and the predetermined distance is the difference, the preset range may be 0; and when the deviation between the first distance and the predetermined distance is the quotient, the preset range may be 1.

In addition to including the at least two sub-electrode plates arranged at intervals, as shown again in Fig. 3, the first electrode plate 102 may further include a continuous sub-electrode plate 1023. The continuous sub-electrode plate 1023 is a continuous electrode plate combined after the at least two sub-electrode plates.

Specifically, if the processing unit 130 determines that the combined first electrode plate 102 is qualified, the combining unit 110 may be further configured to combine the continuous sub-electrode plate 1023 with the separator 101.

Since the angle of an outer corner is small when the electrode plate is subjected to a winding operation, the wrinkles caused by winding the electrode plate around the corner are relatively slight. In addition to the sub-electrode plates arranged at intervals, the first electrode plate 102 in the above technical solution further includes a continuous sub-electrode plate 1023. The continuous sub-electrode plate 1023 can improve the performance of the battery, for example, increasing the energy density of the battery.

Further, as shown again in Fig. 2, the electrode plate inspection device 100 may further include a removing unit 170 configured, when the processing unit 130 determines that the combined first electrode plate 102 is unqualified, to remove the combined first electrode plate 102.

The removing unit 170 may be, for example, a cutter. When the first electrode plate 102 is unqualified, the cutter may cut off the current first electrode plate 102 to remove the first electrode plate 102.

If a sub-electrode plate is combined by the combining unit 110, the measuring unit 120 then measures a first distance, and the processing unit 130 determines that the combined first electrode plate 102 is unqualified according to the first distance measured by the measuring unit 120, the removing unit 170 may remove the combined first electrode plate 102 by only removing the most recently combined sub-electrode plate. If after the third sub-electrode plate is combined by the combining unit 110, the processing unit 130 determines that the first electrode plate 102 is unqualified according to the first distance between the third sub-electrode plate and the second sub-electrode plate, the removing unit 170 may remove the third sub-electrode plate. Alternatively, the removing unit 170 may remove all the combined sub-electrode plates, such as the first sub-electrode plate, the second sub-electrode plate and the third sub-electrode plate.

If the combining unit 110 combines all the sub-electrode plates with the separator 101, the measuring unit 120 then measures the first distance between two adjacent sub-electrode plates, and the processing unit 130 determines the combined first electrode plate 102 is unqualified according to the measured at least one first distance, the removing unit 170 may remove the combined first electrode plate 102 by removing the entire first electrode plate 102.

After the removing unit 170 removes the unqualified first electrode plate 102, the combining unit 110 may combine the first sub-electrode plate with the separator 101 again.

In the above technical solution, when the combined first electrode plate 102 is unqualified, the removal of the unqualified first electrode plate 102 can significantly increase the removal rate of unqualified products and thus improve the product quality of the battery.

In addition to the electrode plate inspection device mentioned above, an embodiment of the present application also provides a winding device. As shown in Fig. 5, the winding device 500 may include an electrode plate inspection device 510 and a winding needle 520. The electrode plate inspection device 510 may be the electrode plate inspection device 100 in the above embodiments.

The winding needle 520 may configured to wind the combined first electrode plate 102 and a second electrode plate 501 together. The second electrode plate 501 is arranged on a side of the separator 101 facing away from the first electrode plate 102, and the first electrode plate 102 and the second electrode plate 501 have different polarities.

Optionally, the first electrode plate 102 may be a positive electrode plate, and the second electrode plate 501 may be a negative electrode plate. Configuring the first electrode plate 102 as a positive electrode plate and the second electrode plate 501 as a negative electrode plate can effectively reduce the problem of lithium plating.

It should be understood that the names of the negative electrode plate and the positive electrode plate are not specifically limited in the embodiments of the present application, that is, they may also be called other names. For example, the positive electrode plate may also be called the cathode electrode plate, and the negative electrode plate may also be called the anode electrode plate.

Optionally, the combining unit 110 may be further configured to combine the second electrode plate 501 and the separator 101. The second electrode plate 501 is a continuous electrode plate and is combined on the side of the separator 101 away from the first electrode plate 102.

It should be understood that in the embodiments of the present application, the terms "first" and" second" are only intended to distinguish different objects, but do not limit the scope of the embodiments of the present application.

Further, the winding device 500 may further include heating units, which may be arranged on two sides of the separator 101 to heat an adhesive on an upper surface and a lower surface of the separator 101. By heating the adhesive, the viscosity of the adhesive is enhanced, contributing to the combining of the separator 101 with the first electrode plate 102.

Illustratively, the heating unit may be, but is not limited to, an oven.

As shown in Fig. 5, the winding device 500 may further include a cutting unit 530. The cutting unit 530 is arranged upstream of the combining unit 110 in the conveying direction, and may be configured to cut the continuous first electrode plate 102 before the combining unit 110 combines the separator 101 with the first electrode plate 102 together, so as to cut the first electrode plate 102 into at least two sub-electrode plates arranged at intervals in the conveying direction. The lengths of the at least two cut sub-electrode plates are the same.

The winding device 500 may further include a control unit, a first electrode plate unwinding driving roller and a separator unwinding driving roller. The control unit may be configured to send a conveying command to the first electrode plate unwinding driving roller and the separator unwinding driving roller after receiving a signal that the winding device 500 starts to operate, the conveying command being configured to instruct the first electrode plate unwinding driving roller to start conveying the first electrode plate 102 and the separator unwinding driving roller to start conveying the separator 101. After receiving the conveying command, the first electrode plate unwinding driving roller and the separator unwinding driving roller start to rotate to convey the first electrode plate 102 and the separator 101. This can facilitate subsequent operations, for example, facilitating the combining unit 110 to combine the separator 101 with the first electrode plate 102 together.

After the winding device 500 performs a winding operation on the first electrode plate 102 and the second electrode plate 501, an electrode assembly as shown in Fig. 3 can be obtained. As can be seen from Fig. 3, the electrode assembly is a wound and stacked integrated electrode assembly.

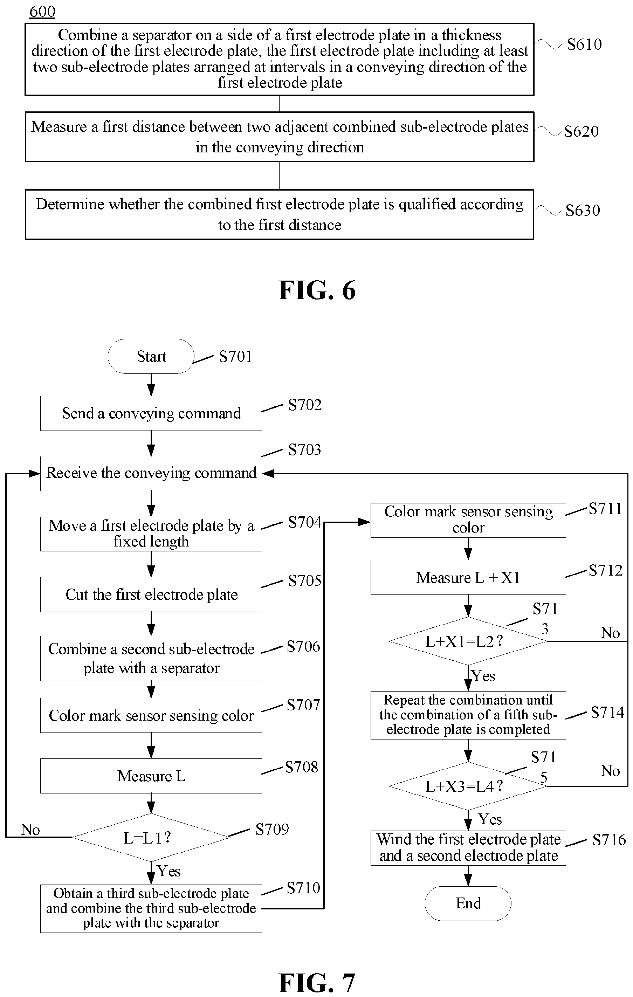

The device embodiments of the present application are described above in detail with reference to Figs. 1 to 4, and a method embodiment of the present application will be described below in detail with reference to Fig. 6. It should be understood that the method embodiments and the device embodiments correspond to each other, and similar descriptions can refer to the device embodiments.

FIG. 6 shows a schematic flowchart of an electrode plate inspection method 600 according to an embodiment of the present application. As shown in Fig. 6, the electrode plate inspection method 600 may also include the following steps:
In step S610, a separator 101 is combined on a side of a first electrode plate 102 in a thickness direction of the first electrode plate 102, the first electrode plate 102 including at least two sub-electrode plates arranged at intervals in a conveying direction of the first electrode plate 102.

In step S620, a first distance between two adjacent combined sub-electrode plates in the conveying direction is measured.

In step S630, whether the combined first electrode plate 102 is qualified is determined according to the first distance.

Optionally, in some embodiments, the electrode plate inspection method 600 may further include: obtaining positions of the combined sub-electrode plates. The step of determining whether the combined first electrode plate 102 is qualified according to the first distance includes: determining whether the combined first electrode plate 102 is qualified according to the positions and the first distance.

Optionally, in some embodiments, a color mark 1211 is provided at an end of each sub-electrode plate, and the step of obtaining positions of the combined sub-electrode plates includes: sensing the color marks 1211 to obtain the positions of the sub-electrode plates.

Optionally, in some embodiments, the sub-electrode plates include a first sub-electrode plate 1021 and a second sub-electrode plate 1022 adjacent to each other, the second sub-electrode plate 1022 is located downstream of the first sub-electrode plate 1021 in the conveying direction, and the first distance is a distance between the first sub-electrode plate 1021 and the second sub-electrode plate 1022; and the step of obtaining positions of the combined sub-electrode plates includes: sensing a color between the first sub-electrode plate 1021 and a preset position to obtain the position of the second sub-electrode plate 1022, the preset position being a preset position of the combined second sub-electrode plate 1022.

The step S630 may specifically include: determining whether the combined first electrode plate 102 is qualified according to the first distance and the sensed color.

Optionally, in some embodiments, the step of determining whether the combined first electrode plate 102 is qualified according to the first distance and the sensed color includes: determining whether the combined first electrode plate 102 is qualified according to the first distance when the sensed color is the same as the color of the separator 101.

Optionally, in some embodiments, the electrode plate inspection method 600 may further include: detecting a moving speed of the first electrode plate 102 in the conveying direction; and measuring the time it takes for the second sub-electrode plate 1022 to be conveyed to the preset position. The step of sensing a color between the first sub-electrode plate 1021 and a preset position includes: sensing, after it is determined that the second sub-electrode plate 1022 reaches the preset position according to the moving speed and the time, the color between the first sub-electrode plate 1021 and the preset position.

Optionally, in some embodiments, the step S630 may specifically include: determining whether the combined first electrode plate 102 is qualified according to a deviation between the first distance and a predetermined distance.

Optionally, in some embodiments, when the combined first electrode plate 102 is qualified, the electrode plate inspection method 600 may further include: combining a continuous sub-electrode plate 1023 with the separator 101, the first electrode plate 102 including the continuous sub-electrode plate 1023, and the continuous sub-electrode plate 1023 being a continuous electrode plate combined after the at least two sub-electrode plates.

Optionally, in some embodiments, the electrode plate inspection method 600 may further include: removing, when the combined first electrode plate 102 is unqualified, the combined first electrode plate 102.

It should be understood that the electrode plate inspection method 600 shown in Fig. 6 may be executed by the electrode plate inspection device 100 in the above embodiments. The electrode plate inspection method 600 can achieve the same technical effect as the electrode plate inspection device 100 described above, and will not be described in detail here for the sake of content detection.

It should also be understood that the steps or operations in Fig. 6 are merely examples, and the embodiments of the present application may also perform other operations or variations of the various operations in Fig. 6.

In order to more clearly understand the electrode plate inspection method 600, an electrode plate inspection method according to a possible embodiment of the present application is described below with reference to Fig. 7. A first electrode plate 102 in Fig. 7 includes five sub-electrode plates.

It should be noted that, since the embodiment of the present application assumes that the position of a first sub-electrode plate is qualified after a separator 101 is combined with the first sub-electrode plate, Fig. 7 will be described by taking the conveying of the second sub-electrode plate as an example.

In step S701, a winding device starts automatically, and a control unit receives an external start button signal.

In step S702, the control unit sends a conveying command to a first electrode plate unwinding driving roller and a separator unwinding driving roller, the conveying command being configured to instruct the first electrode plate unwinding driving roller and the separator unwinding driving roller to convey the first electrode plate 102 and the separator 101, respectively.

In step S703, the first electrode plate unwinding driving roller starts to rotate after receiving the conveying command.

In step S704, the first electrode plate 102 is moved by a fixed length according to a determined length of each sub-electrode plate included in the first electrode plate.

In step S705, after the first electrode plate 102 is moved by the fixed length, the first electrode plate 102 is cut off to obtain a second sub-electrode plate.

In step S706, the first electrode plate unwinding driving roller and the separator unwinding driving roller synchronously convey the second sub-electrode plate and the separator 101, and the combining unit combines the second sub-electrode plate with the separator 101.

In step S707, after estimating that the second sub-electrode plate reaches a preset position of the second sub-electrode plate, an encoder sends a detection command to a color mark sensor, the detection command being configured to instruct the color mark sensor to start sensing a color between the preset position of the second sub-electrode plate and the first sub-electrode plate.

If the color between the preset position of the second sub-electrode plate and the first sub-electrode plate is the same as the color of the separator, it can be indicated that the actual position of the second sub-electrode plate is the same as the preset position, and step S708 is executed. If the color between the preset position of the second sub-electrode plate and the first sub-electrode plate is the same as the color of the separator, it is indicated that the actual position of the second sub-electrode plate is different from the preset position, and the second sub-electrode plate is not qualified. The removing unit 170 removes the first sub-electrode plate and the second sub-electrode plate that have been combined, and step S703 is re-executed.

In step S708, a measuring unit 120 measures a first distance L between the first sub-electrode plate and the second sub-electrode plate that have been combined in the conveying direction.

In step S709, the first distance L is compared with a predetermined distance L1.

If the deviation between L and L1 is within a preset range, step S710 is executed. If the deviation between L and L1 is not within the preset range, the removing unit 170 removes the first sub-electrode plate and the second sub-electrode plate that have been combined, and step S703 is re-executed.

In step S710, after the first electrode plate 102 is moved by the fixed length again, the first electrode plate 102 is cut off to obtain a third sub-electrode plate, and the combining unit combines the third sub-electrode plate with the separator.

In step S711, after estimating that the third sub-electrode plate reaches a preset position of the third sub-electrode plate, the encoder sends a detection command to the color mark sensor, the detection command being configured to instruct the color mark sensor to start sensing a color between the preset position of the third sub-electrode plate and the second sub-electrode plate.

If the color between the preset position of the third sub-electrode plate and the second sub-electrode plate is the same as the color of the separator, it can be indicated that the actual position of the third sub-electrode plate is the same as the preset position, and step S712 is executed. If the color between the preset position of the third sub-electrode plate and the second sub-electrode plate is the same as the color of the separator, it is indicated that the actual position of the third sub-electrode plate is different from the preset position, and the third sub-electrode plate is not qualified. The removing unit 170 removes the first sub-electrode plate, the second sub-electrode plate and the third sub-electrode plate that have been combined, and step S703 is re-executed.

In step S712, a measuring unit 120 measures a first distance L + X1 between the third sub-electrode plate and the second sub-electrode plate that have been combined in the conveying direction.

In step S713, the first distance L + X1 is compared with a predetermined distance L2.

If the deviation between L + X1 and + L2 is within a preset range, step S714 is executed. If the deviation between L + X1 and L2 is not within the preset range, the removing unit 170 removes the first sub-electrode plate, the second sub-electrode plate and the third sub-electrode plate that have been combined, and step S703 is re-executed.

In step S714, the same method is used to perform combination on a fourth sub-electrode plate and a fifth sub-electrode plate respectively.

In step S715, the first distance L + X3 between the fifth sub-electrode plate and the fourth sub-electrode plate is compared with a predetermined distance L4.

If the deviation between L + X3 and L4 is within a preset range, step S716 is executed. If the deviation between L + X3 and L4 is not within the preset range, the removing unit 170 removes the first sub-electrode plate, the second sub-electrode plate, the third sub-electrode plate, the fourth sub-electrode plate and the fifth sub-electrode plate that have been combined, and step S703 is re-executed.

In step S716, the combined first electrode plate is wound together until a complete wound electrode assembly as shown in Fig. 3 is formed.

It should be noted that L = L1 in Fig. 7 does not mean that L is absolutely equal to L1, but rather that the deviation between L and L1 is within a preset range. The same applies to L + X1 = L2 and L + X3 = L4.

While the present application has been described with reference to the preferred embodiments, various modifications may be made and components therein may be replaced with equivalents without departing from the scope of the present application. In particular, the technical features mentioned in the various examples can be combined in any manner as long as there is no structural conflict. The present application is not limited to the specific embodiments disclosed herein, but rather includes all technical solutions falling within the scope of the claims.

## Claims

1. An electrode plate inspection device, comprising:
a combining unit (110) configured to combine a separator (101) on a side of a first electrode plate (102) in a thickness direction of the first electrode plate (102), the first electrode plate (102) comprising at least two sub-electrode plates arranged at intervals in a conveying direction of the first electrode plate (102);
a measuring unit (120) arranged downstream of the combining unit (110) in the conveying direction, and configured to measure a first distance between two adjacent combined sub-electrode plates in the conveying direction; and
a processing unit (130) configured to determine whether the combined first electrode plate (102) is qualified according to the first distance.

2. The electrode plate inspection device according to claim 1, wherein the measuring unit (110) further comprises:
a sensor (121) configured to obtain positions of the combined sub-electrode plates; and
the processing unit (130) is configured to determine whether the combined first electrode plate (102) is qualified according to the positions and the first distance.

3. The electrode plate inspection device according to claim 2, wherein the sensor (121) is a color mark sensor, a color mark (1211) is provided at an end of each sub-electrode plate, and the color mark sensor is configured to obtain the positions of the sub-electrode plates by sensing the color marks (1211).

4. The electrode plate inspection device according to claim 2, wherein the sub-electrode plates comprise a first sub-electrode plate (1021) and a second sub-electrode plate (1022) adjacent to each other, the second sub-electrode plate (1022) is located downstream of the first sub-electrode plate (1021) in the conveying direction, and the first distance is a distance between the first sub-electrode plate (1021) and the second sub-electrode plate (1022);
wherein the sensor (130) is a color mark sensor configured to obtain the position of the second sub-electrode plate (1022) by sensing a color between the first sub-electrode plate (1021) and a preset position, the preset position being a preset position of the combined second sub-electrode plate (1022); and
the processing unit (130) is configured to determine whether the combined first electrode plate (102) is qualified according to the first distance and the color sensed by the color mark sensor.

5. The electrode plate inspection device according to claim 4, wherein the processing unit (130) is configured to determine whether the combined first electrode plate (102) is qualified according to the first distance when the color sensed by the color mark sensor is the same as the color of the separator (101).

6. The electrode plate inspection device according to claim 4 or 5, further comprising:
a speed sensor (150) configured to detect a moving speed of the first electrode plate (102) in the conveying direction; and
a timer (160) configured to measure the time it takes for the second sub-electrode plate (1022) to be conveyed to the preset position; wherein
after it is determined that the second sub-electrode plate (1022) reaches the preset position according to the moving speed and the time, the color mark sensor is configured to sense the color between the first sub-electrode plate (1021) and the preset position.

7. The electrode plate inspection device according to any one of claims 1 to 6, wherein the processing unit (130) is configured to determine whether the combined first electrode plate (102) is qualified according to a deviation between the first distance and a predetermined distance.

8. The electrode plate inspection device according to any one of claims 1 to 7, wherein when the combined first electrode plate (102) is qualified, the combining unit (110) is further configured to:
combine a continuous sub-electrode plate (1023) with the separator (101), the first electrode plate (102) comprising the continuous sub-electrode plate (1023), and the continuous sub-electrode plate (1023) being a continuous electrode plate combined after the at least two sub-electrode plates.

9. The electrode plate inspection device according to any one of claims 1 to 7, further comprising:
a removing unit (170) configured, when the combined first electrode plate (102) is unqualified, to remove the combined first electrode plate (102).

10. A winding device, comprising:
the electrode plate inspection device (510) according to any one of claims 1 to 9; and
a winding needle (520) configured to wind the combined first electrode plate (102) and a second electrode plate (501) together, wherein the second electrode plate (501) is arranged on a side of the separator (101) facing away from the first electrode plate (102), and the first electrode plate (102) and the second electrode plate (501) have different polarities.

11. The winding device according to claim 10, wherein the combining unit (110) is further configured to combine the second electrode plate (501) with the separator (101), and the second electrode plate (501) is a continuous electrode plate and is combined on the side of the separator (101) facing away from the first electrode plate (102).

12. An electrode plate inspection method, comprising:
combining a separator (101) on a side of a first electrode plate (102) in a thickness direction of the first electrode plate (102), the first electrode plate (102) comprising at least two sub-electrode plates arranged at intervals in a conveying direction of the first electrode plate (102);
measuring a first distance between two adjacent combined sub-electrode plates in the conveying direction; and
determining whether the combined first electrode plate (102) is qualified according to the first distance.

13. The electrode plate inspection method according to claim 12, further comprising:
obtaining positions of the combined sub-electrode plates; wherein
the step of determining whether the combined first electrode plate (102) is qualified according to the first distance comprises:
determining whether the combined first electrode plate (102) is qualified according to the positions and the first distance.

14. The electrode plate inspection method according to claim 13, wherein a color mark (1211) is provided at an end of each sub-electrode plate, and the step of obtaining positions of the combined sub-electrode plates comprises:
sensing the color marks (1211) to obtain the positions of the sub-electrode plates.

15. The electrode plate inspection method according to claim 13, wherein the sub-electrode plates comprise a first sub-electrode plate (1021) and a second sub-electrode plate (1022) adjacent to each other, the second sub-electrode plate (1022) is located downstream of the first sub-electrode plate (1021) in the conveying direction, and the first distance is a distance between the first sub-electrode plate (1021) and the second sub-electrode plate (1022);
the step of obtaining positions of the combined sub-electrode plates comprises:
sensing a color between the first sub-electrode plate (1021) and a preset position to obtain the position of the second sub-electrode plate (1022), the preset position being a preset position of the combined second sub-electrode plate (1022); and
the step of determining whether the combined first electrode plate (102) is qualified according to the first distance and the positions comprises:
determining whether the combined first electrode plate (102) is qualified according to the first distance and the sensed color.

16. The electrode plate inspection method according to claim 15, wherein the step of determining whether the combined first electrode plate (102) is qualified according to the first distance and the sensed color comprises:
determining whether the combined first electrode plate (102) is qualified according to the first distance when the sensed color is the same as the color of the separator (101).

17. The electrode plate inspection method according to claim 15 or 16, further comprising:
detecting a moving speed of the first electrode plate (102) in the conveying direction; and
measuring the time it takes for the second sub-electrode plate (1022) to be conveyed to the preset position; wherein
the step of sensing a color between the first sub-electrode plate (1021) and a preset position comprises:
sensing, after it is determined that the second sub-electrode plate (1022) reaches the preset position according to the moving speed and the time, the color between the first sub-electrode plate (1021) and the preset position.

18. The electrode plate inspection method according to any one of claims 12 to 17, wherein the step of determining whether the combined first electrode plate (102) is qualified according to the first distance comprises:
determining whether the combined first electrode plate (102) is qualified according to a deviation between the first distance and a predetermined distance.

19. The electrode plate inspection method according to any one of claims 12 to 18, wherein when the combined first electrode plate (102) is qualified, the electrode plate inspection method further comprises:
combining a continuous sub-electrode plate (1023) with the separator (101), the first electrode plate (102) comprising the continuous sub-electrode plate (1023), and the continuous sub-electrode plate (1023) being a continuous electrode plate combined after the at least two sub-electrode plates.

20. The electrode plate inspection method according to any one of claims 12 to 18, further comprising:
removing, when the combined first electrode plate (102) is unqualified, the combined first electrode plate (102).
